(19) Europäisches Patentamt
European Patent Office
Office européen des brevets

(11) Publication number: **0 100 821 B1**

# (12) EUROPEAN PATENT SPECIFICATION

(45) Date of publication of patent specification: **25.07.90**

(51) Int. Cl.$^5$: **G 06 F 15/40**

(21) Application number: **83104483.9**

(22) Date of filing: **06.05.83**

## (54) Method and apparatus for managing a database.

(30) Priority: **30.06.82 US 393902**
**21.06.82 US 390163**
**21.06.82 US 390454**
**21.06.82 US 390485**
**24.06.82 US 391629**
**29.06.82 US 393244**

(43) Date of publication of application:
**22.02.84 Bulletin 84/08**

(45) Publication of the grant of the patent:
**25.07.90 Bulletin 90/30**

(84) Designated Contracting States:
**DE FR GB IT**

(56) References cited:
**US-A-4 068 300**

**FIFTH INTERNATIONAL CONFERENCE ON VERY LARGE DATA BASES, 3rd-5th October 1979, Rio de Janeiro, Brazil, pages 340-350, IEEE, New York, US; H. BREITWIESER et al.: Transaction and catalog management of the distributed file management system DISCO"**

(73) Proprietor: **International Business Machines Corporation**
**Old Orchard Road**
**Armonk, N.Y. 10504 (US)**

(72) Inventor: **Haderle, Donald James**
**812 Lilac Way**
**Los Gatos California 95030 (US)**
Inventor: **Shan, Ming-Chien**
**6337 Slida Dr.**
**San Jose California 95129 (US)**
Inventor: **Putzolu, Gianfranco Raimondo**
**17550 Nillview Ave.**
**Morgan Hill, Ca 95037 (US)**
Inventor: **Traiger, Irving Lawrence**
**1031 Mt. Darwin Dr.**
**San Jose CA 95120 (US)**

(74) Representative: **Ahlman, Bertel**
**IBM Svenska AB Intellectual Property Department**
**S-163 92 Stockholm (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 100 821 B1

## Description

This invention relates to a new computing apparatus and method for managing a database. More specifically, it relates to an apparatus and method for executing user transactions in a data base computing system.

Computing systems typically include a collection of data which is referenced by application programs. A database management system is provided for managing the creation, modification, and use of such data collections and their descriptors.

In one prior art database management system, the IBM IMS/VS Version 1, in order to make changes in data descriptors, a database administrator (DBA) first generates a new set of descriptors, such as physical/logical database descriptors (DBDs) offline (that is, independently of the installed IMS system). The DBA then invokes an IMS utility to unload the data on tapes, replace the descriptors in an IMS DBD library, and then invoke the IMS utility to reload the data. Of course, during the definitional (unloading and reloading) operations, the data is not available for access by application programs or transactions.

In prior art relational database management systems, such as the IBM Sequel Query Language (SQL), the database and its associated descriptors comprise one or more logical spaces called segments. In a relational database management system of this type, one or more transactions may be prebound to reference certain descriptors. Any transaction requiring a descriptor change is required to lock the entire segment in which the target descriptor resides. This approach provides a certain degree of dynamic definitional change at the expense of prohibiting all transactions from referencing any data which is not subject to change but resides in the same segment.

Consequently, there is a need in the art for a data-base management system having enhanced data definitional capabilities which provide high availability of operational data and low user operational overhead.

The present invention is defined in the attached claims.

The invention provides a computing system characterized by a database management system which provides for online definition of data descriptors while maintaining the availability of data and data descriptors not impacted by a concurrent definitional process. Under the control of the data-base management system of the invention, the domain effected by the definitional process is determined, transactions which reference descriptors within the domain effected by the definitional process are marked for rebinding, prior-to-commit access by transactions which have not been prebound to objects within the domain effected by the definitional process is inhibited, and thereafter all accesses to objects in the domain are allowed.

The invention will now be described with reference to the attached drawings.

Figure 1 is a diagrammatic illustration of a computing system including a database management system.

Fig. 2 is a diagrammatic illustration of the processing of a data definition language statement through various components of the database manager of Figure 1.

Figure 3 is a diagrammatic illustration of the processing of a data manipulation language statement through various components of the database manager of Figure 1.

Figure 4 is a diagrammatic illustration of a database descriptor.

Figure 5 is a diagrammatic illustration of a database descriptor section.

Figure 6 is a diagrammatic illustration of the processing of an application program containing Sequel statements into executable text.

Figure 7 is a diagrammatic illustration of a SKCT, or plan, showing its relationship to a database descriptor.

Description of the preferred embodiment

In Table 1 is set forth a listing of the abbreviations used in the following description of a preferred embodiment of the invention.

TABLE 1

Abbreviations listing

| | |
|---|---|
| CL | Control Language |
| CT | Cursor Table |
| CTDB | Cursor Table Database Descriptor Block |
| CUB | Cursor Block |
| DBA | Database Administrator |
| DBD | Database Descriptor |
| DBTG | Database Task Group |
| DBDM | Database Descriptor Manager |
| DBRM | Database Request Module |
| DDL | Data Definition Language |
| DM | Data Manipulation Component |
| DML | Data Manipulation Language |
| OBD | Object Descriptor |
| OBID | Object Identifier |
| PSCB | Page Set Control Block |
| RDS | Relational Data System |
| SKCT | Skeleton Cursor Table |
| SQL | Sequel Query Language |

Referring to Figure 1, a storage map is illustrated for a typical IBM MVS system 50, including common system area (CSA) 60, nucleus 62, and a collection of private address spaces 64 comprising batch address space 65, TSO address space 66, CICS address space 67, IMS/VS address spaces 68, 69, and database management system (DBMS) 70 address spaces master (MSTR) 71 and database manager (DBM) 74. DMBS MSTR 71 includes modules providing control, recovery, and logging functions. The control modules interface the application programs in allied address spaces 86 to DBMS 70. The logging modules maintain the system logs on DASD 75 and archive tape 87, and the recovery modules utilize those logs in restoring the system to operation following an interruption. These facilities are more fully described in copending EP patent applications by D. Gawlick et al for "Method and Apparatus for Logging Journal Data Using a Log Write Ahead Data Set" number EP—A—0098928, by E. Jenner for "Method and Apparatus for Restarting a Computing System", number EP—A—0097234, and by R. Reinsch for "Computing System and Method for Operating the same", number EP—A—0097258. Data base manager 74 includes modules controlling access to data repository 76, utilizing data descriptors 77 and catalog 78. DBM 74 modules include relational data system 96, data manipulation component 98; and database descriptor manager 94. Allied address spaces 86 include the application programs written in a language such as PL/I which, as will be more completely described in connection with Figure 6, contain Sequel Query Language (SQL) statements for defining and manipulating data in data resource 76. Application programs 86 communicate to the DBM 74 via the language SQL which has two component parts: a Data Definition Language (DDL) component and a Data Manipulation Language (DML) component.

Operating system 50 may be an IBM OS/MVS (as shown) system executing on an IBM System/370. The IBM System/370 is described in IBM System/370 Principles of Operation, IBM Publication GA22-7000-6.

Referring to Figure 2, the processing of a data definition language statement is illustrated. DDL statements of interest to the present invention include the following:

CREATE
ALTER
DROP

Each of these statement reference a data 76 object. In Table 2 is set forth the terms used by users of SQL 90 for referring to these objects together with the corresponding internal descriptors created by DBDM 94.

TABLE 2
Data objects 76

| SEQUEL DDL TERMS | DBDM INTERNAL DESCRIPTORS |
|---|---|
| DATABASE | DATABASE |
| TABLE SPACE | FILE<br>FILE PAGE SET |
| TABLE | RECORD TYPE |
| INDEX | FAN SET<br>INDEX PAGE SET |

VSAM data set(s) are created or associated with file page sets or index page sets, and provide the actual space where data supplied by DML statements will be stored.

During a bind process, a DDL statement 100 is passed from an application 101 address space 86 to RDS 96 which first passes a request to the data manipulation component (DM) 98. DM 98 records in database catalog 78 a description of statement 100 which is in a form accessible for external access. Next, the request is passed by RDS 96 to DBDM 94, the DBM 74 module which controls the creation, reading, deletion, and alteration of data descriptors. DBDM 94 establishes internal descriptors required to satisfy this statement 100 which it passes to DM 98 for recording on DBD 77, a database containing internal descriptors in a compact form for efficient retrieval. DBD 77 will be more fully described in connection with Figures 4 and 5.

Referring now to Figure 3, a data manipulation language (DML) statement 102 is processed as shown. DML statements of interest to the present invention include the following:

SELECT
INSERT
UPDATE
DELETE

Each of these DML statements 102 reference only rows (or tuples) within a table described by a DDL statement 100. A DML statement 102 from some allied region 86 is passed to RDS 96 which first access DBD 77 through DM 98 to obtain the descriptor for the data object specified in statement 102, and then accesses the data object in data set 76, again using the services of DM 98.

For further information with respect to relational data systems of the type herein described, reference is made to G. Sandberg, "A primer on relational database concepts", IBM System Journal, Vol. 20, No. 1, 1981, pp. 23—41, and to M. W. Blasgen, et al, "System R: An architectural overview", IBM System Journal, Vol. 20, No. 1, 1981, pp. 41—62.

Referring now to Figures 4 and 5, a description will be given of DBD 77. Either DBD 77 or an OBD 122—128 can be used as the basic unit in definitional operations. A DBD 77 comprises one or more sections 110—114 which are chained together, to accommodate changes while keeping pointers valid. Each DBD section 110 includes header 120, object ID (OBID) map 121, contiguous free area 129, and an allocated area including OBDs 122—128 and holes 130. Header 120 contains a pointer to the next DBD section 112 in DBD 77, the offset to contiguous free area 129, the total amount of contiguous free space, and the present number of entries in OBID map 121. OBID map 121 is a list of, say, four byte entries containing offsets from the beginning of the DBD 77 to the OBDs 122—128 in the allocated area, or zeros for available OBIDs 121. The list is addressed using two byte IDs which are the OBIDs of the corresponding OBDs 122—128. OBIDs 121 are reusable after commitment of OBD 122—128 delete operations. Holes 130 are spaces resulting from OBD 122—128 deletions. Each OBD describes a data object 140, 142, 144 on database 76. As shown, OBD 124 describes data object 140. Each OBD 122—128 may be referenced by an SKCT 150 plan, which will be more fully described in connection with Figure 7. As shown in Figure 5, PLAN A 152 references OBD 124, PLAN B 154 references OBD 122, and both PLAN C 156 and PLAN D 158 reference OBD 126.

Referring now to Figure 6, a description will be given of the compilation of a typical application program, such as application program 153 from allied address space 86 which includes, for example, a SQL SELECT statement. Precompiler 160 precompiles the application code 153 into modified application code 162 which replaces the SQL statements in code 153 with calls including appropriate parameter lists to database request module 180 in DBMS 70. Compiler 170 compiles the modified code 162 to produce executable text 174 which is then link edited into an execution load module 177. Precompiler 160 extracts the SQL statements from the application code 153 and places them in a file called a Database Request Module 180. These are bound 184 by a process to be described hereafter in connection with Figure 7 into a skeleton cursor table (SKCT) 152. SKCT 152 is converted into cursor table (CT) 155 by create thread process 176, as will be more fully described in connection with Figure 7. This process is still further described in Blasgen, et al, supra.

Bind process 184 takes as input a set of database request modules (DBRMs) 180 as specified by a bind processor, saves DBRMs 180 in catalog 78 and names the set. That set, together with other information provided with the DBRMs 180, is referred to as the bind source. Binding also yields the SKCT, or plan, 152 which is the form of the bind source which is internal to DBMS 70. During DDL 100 operations, plans may be deleted, the bind source remains intact, such that it may be rebound when a deleted plan is required.

Referring now to Figure 7, a description will be given of an SKCT, or plan, 152. Plan 152 identifies the set of SQL (DML 102) statements that the corresponding users 150 may execute. Plan 152 includes a header 200 having pointers 202, 204 to sections 210 and 240 of the plan in data manipulation component 98 and relational data system component 96, respectively. DM section 210 includes a plurality of cursor blocks (CUBs) 220 and PSCBs 230. As shown, CUB 220 includes a pointer field 222 identifying the OBD 124 in DBD 77 which describes data object 140. A plurality of such CUBs point to various OBDs describing all of the data objects 76 available to users of this plan 152. RDS section 240 includes a program table 250 providing pointers 254 for each identified bound program 252. As shown, pointer 256 references section lookup table 260 which includes an entry for each section of the bound program. An entry includes the section identifier 262 and a pointer 264 to the corresponding section. Herein, pointer 266 references section 272, and pointer 268 references section 270. Section 270, by way of illustration, includes the executable code 280 for one DML statement and invocation structures including pointer 274 to the CUB 220 for the corresponding OBD 124.

During an early descriptor bind operation, when this plan 152 is built, RDS 76 obtains from catalog 78 the OBID 276 for the OBD 124, and plugs into CUB field 222 that OBID value. Thereafter, when this plan 152 is referenced on behalf of an authorized user, CUB field 222 is used to search the descriptor OBD 124 for the data object 140 to be referenced and plugs the address of the OBD 124 in CUB field 222.

The existence of a plan 152 requires that the OBDs 124 it references stay unchanged.

During allocation time (create thread 176), skeleton cursor table (SKCT) 152 is copied by DBM 74 and transformed into a cursor table (CT) 155 completing or modifying selected fields. Hereafter, reference to an SKCT may be to the SKCT before allocation or to the CT resulting from allocation.

Locks are used by data manipulation component 98 to serialize the search of OBDs 122—128 to prevent other users from updating them during that search time. So, when updating OBDs 122—128, DBDM 94 obtains an exclusive lock on DBD 77 to prevent searches of the descriptors 122—128 by DM 98. The procedure for changing OBD 126, therefore, is as follows:

1) RDS 96 uses a dependency list created during bind by RDS 96 and stored in catalog 78 to quiesce by way of a lock on SKCTs 156 and 158 referencing that OBD 126 all early bound users of data structures 142.

2) DBDM 94 locks the DBD 77 containing the OBD 126 exclusive, and makes the change to OBD 126. Alternatively, DBDM 94 could lock at the OBD 126 level.

Even though a lock on DBD 77 is held by DBDM 94, only plans 156 and 158, which reference OBD 126 need be quiesced since only they depend on that structure which is undergoing change.

In the descriptions which follow of the locking protocols, reference will be made to the following locks: (1) a manual lock, which terminates under control of the owner of the resource being accessed; (2) a commit lock, which terminates when the user has reached sync point; and (3) an allocation, create thread, or deallocation lock, which terminates at deallocation time, i.e., when the thread is destroyed. Allocation occurs at create thread 176, when an attempt is made to get the resources needed to execute a plan.

Having given a general description of Figures 1—7, the operation of these structures and procedures in carrying out the invention will be explained.

In a relational database 76 of the type managed by the database management system 70 of this preferred embodiment of the invention, data objects 76 with which application program can deal are data bases, tablespaces, tables, and indexes. Associated with each such data object 76 is a database descriptor 77. Each of these data objects 76 can be created, dropped, or altered via appropriate DDL 100 transaction statements.

For each request for a tablespace object 76 creaction via statement 100, there are a file descriptor and a file page set descriptor built within database descriptor 77 to represent the tablespace. Similarly, an index descriptor and an index page set descriptor are built in DBD 77 for an index object 76, and a record type descriptor is built to represent a table object 76.

For frequently repeated transactions 103, an application plan (SKCT) 150 is built during a static binding time. The information in plan 150 is used to avoid an expensive binding step at each subsequent execution of transaction statement 102. During the process of static binding, a SQL statement 102 in application program 103 is bound to data object descriptors 76 necessary to satisfy the requirements of the statement. The binding information is recorded in an application plan 152, and the dependency relationships between data objects 76 and plans 152 are stored in catalog 78. Data base management system (DMBS) 70 maintains catalog 78 by inserting new plans 150 when a new relationship is established, and modifying or deleting a plan 150 when the relationship is changed or dropped. This information is also used by DBMS 70 to identify plans 150 that need to be locked to quiesce activity on data objects 76. During allocation, the associated plan 150 is referenced to actually allocate the data objects 76 to the transaction.

For dynamic SQL statements 100, 102 the binding of the actual statement is deferred until execution time, when the transaction dynamically constructs the statement. At this time, a dynamic binding function is invoked to build cursor blocks (CUB) 220 and allocate data objects 76.

Before any change can be made to a data descriptor 122—128, DBMS 70 must assure (1) that no transaction currently running depends upon that descriptor 122—128 (that is, an operation initiated in executing a DDL statement 100 will be denied if there is an outstanding DBMS utility job referencing the target descriptor 77), and (2) that all existing pre-bound plans 150 and internal control blocks 220, 230 affected by the change are invalidated to prevent obsolete information in data objects 76 from being used in the future. In addition, in order to preserve the data integrity of the system, certain DBMS 70 operations will also be denied if they aim at an incomplete or logically deleted data object 76.

The manner in which the various control structures and data areas above described are used to support concurrent, online definitional operations will next be described.

In all cases, the entire DBD 77 is locked in either shared or exclusive mode during DBDM 94 operations, since DBD 77 is the unit of reading and writing descriptors from/to DASD 76. In the case of DBD 77 deletion, DBD 77 is locked in exclusive mode with deallocation duration. This deallocation duration lock is used to prevent other concurrent transactions from seeing the deleted DBD 77. Otherwise, other transactions can locate and access the deleted DBD 77, since DBMS 70 does not erase the virtual memory of a statically bound DBD 77 until deallocation. For other operations, DBD 77 is locked in exclusive mode with commit duration, to insure that backout is possible without impacting operations by other transactions Backout is described in the copending Jenner application previously mentioned. For read operations, DBD 77 is locked in share mode with commit duration, to avoid dirty reads, i.e. to prevent one transaction from seeing uncommitted DBD 77 changes made by another concurrently running transactions.

It is required that DBD 77 be locked at least in share mode, for at least commit duration, during static and dynamic bind operations, in order to avoid dirty reads of uncommitted descriptor changes.

Since allocation does not acquire locks on DBD 77, synchronization is needed during DDL operations to prohibit pre-bound work units from accessing descriptors 77 while descriptors 77 are changing. In some cases, the definitional subcomponent DBDM 94 of DBMS 70 will lock file page sets 76 to prohibit allocation of data or index page sets whose descriptors 122—128 are undergoing change. There are other cases where page set locking is not sufficient and the related plan 150 must be locked. For example, allocation follows page set OBD 122—128 chains to locate page set descriptors before locking the page sets.

Before describing the detailed locking protocols for all DDL 100 operations, the implication of each general lock category will be described.

A DBD 77 lock in exclusive mode will serialize with binding or other DDL 100 operations within the DBD 77 by other transactions.

A DBD 77 lock in share mode will serialize with DDL 100 operations within the DBD by other transactions.

An SKCT 150 lock in exclusive mode will serialize allocation by other transactions bound to that SKCT.

A lock on a page set 76 will serialize allocation by other transactions to the page set.

A lock on the open function for a page set 76 in exclusive mode will serialize open and close operations on the page set by other transactions.

A DBD 77 is locked before the quiescing of SKCTs 150 in order to prevent new binding to the target object 76. Otherwise, if SKCT 150 quiescing is done first, a new SKCT 150 may be bound to the target object 76 by another transactions in the time interval starting at the completion of locking on existing related SKCTs 150 and ending at the granting of the lock request on the DBD 77. If this occurs, the newly created SKCT 150 would not be quiesced.

Locking of SKCTs 150 must be in exclusive mode for at least commit duration, to prohibit allocation of the given SKCT 150 by other transactions.

In the case of DBD 77 or OBD 122—128 deletion, the lock on the current SKCT 150 must be held until deallocation time. Otherwise, after the next commit of an invoking transaction A, his cursor table (CT) is still active, but has no SKCT 150 to cover it. Therefore, another transaction B may cause definitional changes that impact transaction A, but there is no SKCT 150 to quiesce activity by transaction A.

In general, the locking strategy of the invention favors locking of page sets 76 over the locking of SKCTs 150, since fewer locks are involved. However, where the SKCT 150 must be locked or deleted anyway and where OBD 77 attributes are examined or an OBD 77 chain is followed during allocation before the page sets are locked, the SKCT lock is chosen.

During UNDO processing (as described in the above referenced copending Jenner application) of DDL 100 CREATE and certain ALTER operations, the CTDB 231, PSCB 230, and CUB 220 run time control blocks are marked invalid since the OBD pointers 222 in those control blocks are no longer valid. The invalidation is applied only to those control blocks which are associated with the invoking transaction when the objects referenced by these control blocks have been modified or deleted. Control blocks for other transactions do not need to be invalidated, because the locking protocol insures that only the invoking transaction could still be operating on the referenced objects 76.

Whenever a database 76 is deleted, the corresponding CTDB 231 is marked invalid.

All record 76 CUBs 220 and index 76 CUBs 220 defined on a record type are marked invalid when the record type, file, or database descriptor 77 is deleted, while only index 76 CUBs 220 are marked invalid when an index 76 is deleted. In general, DDL 100 ALTER operations do not affect any CUBs 220, except for the case of addition of new fields or database 76 validation procedure to an existing record type. This is because the record type OBD 122—128 generally has to be moved to tolerate the expansion of the OBD. However, a pointer to the OBD is kept in all related record type and index CUBs 220, so that the CUBs must be marked invalid.

All file page sets 76 PSCBs 230 and all associated index page set 76 PSCBs are marked invalid when a file page set, file, or database 76 is deleted, while only the index page set PSCB 230 is marked invalid when an index page set 76 is deleted.

Having described the various modules and control blocks, the procedures executed to perform on-line definitional change (that is, changes to DBDs 77 and OBDs 122—128) will be explained.

Binding of an application plan

In binding an application plan, no DBD 77 lock is needed since a page lock on the catalog table 78 is sufficient for synchronization purposes of a current transaction with other interest-conflict concurrent transactions.

The procedure is:

1) Lock the page in catalog 78 which contains the plan in exclusive mode with commit duration.
2) Lock the target plan 150 in exclusive mode with commit duration.
3) Invoke RDS 96 to process DBRMs 180, produce SKCT 152 sections 210, 240.
4) Store the target plan 150.

Execution of a pre-bound SQL statement

In executing a pre-bound SQL statement 100, 102, an SKCT 150 lock is needed to prevent the plan 150 from being deleted or modified by another transaction and a page set or page 76 lock is needed to synchronize concurrent read/update on the same data items 76 among different transaction.

The procedure is:

1) Lock the associated plan 150 in shared mode with commit duration.
2) Lock the target page set or page 76 in shared or exclusive or update mode with commit duration.
3) Execute the SQL statement 100, 102.

Execution of a dynamic SQL statement

In executing a dynamic SQL statement, a DBD 77 lock is needed to prevent the DBD from being deleted or modified by another transaction, and a page set or page lock is needed to synchronize concurrent read or update on the same data items 76 among different transactions.

The procedure is:

1) Lock the target DBD 77 in shared mode with commit duration.
2) Lock the target page set or page 76 in shared or exclusive or update mode with commit duration.
3) Execute the SQL statement 100, 102.

Execution of an utility job

In executing a utility job, a DBD 77 lock is needed to allow the utility to update appropriate flags in the DBD, and a page set or page 76 lock is needed to synchronize concurrent read or update on the same data items 76 among different transactions.

The procedure is:

1) Lock the target DBD 77 in exclusive mode with commit duration.
2) Set the "utility-in-process" flag in DBD 77.
3) Lock the target page set or page 76 in shared or exclusive or update mode with commit duration.
4) Do the utility process.

Execution of a Definitional (DDL) statement

The remaining procedures set forth the locking protocol for each of the DDL statements 100 of interest to this invention.

Creating a database descriptor

In creating a database 76 descriptor 77 a lock on the module which generates database identifiers is used to serialize the allocation of DB identifiers (DBid); however, no DBD 77 lock is needed since the DBD 77 being created has not yet been exposed to another transaction no SKCT 150 lock is needed since no new SKCT can be bound to the database 76 and SKCTs 150 bound to previous incarnations of the same DBid would have been deleted, and no page set 76 lock is needed since no page set has yet been created in the DBD being created.

The procedure is:

1) Lock the DBid generator in exclusive mode with commit duration.

2) Allocate a DBid to the new DBD 77.
3) Build the new DBD 77.

Deleting a database descriptor

In deleting a DBD 77, an SKCT 150 lock is needed to quiesce all concurrent statically bound transactions against any data object in the DBD 77. The locks must be held for at least commit duration, except the lock on SKCT 150 of the current transaction, which must be held for deallocation duration. An SKCT 150 deletion is needed to stop all subsequent activities against any object in the DBD 77.

The procedure is:

1) Lock the target DBD 77 in exclusive mode with deallocation duration.
2) Lock the plans 150 on all files in DBD 77 in exclusive mode with commit or deallocation duration.
3) Delete the plans 150 on all files in DBD 77.
4) Invalidate the CTDB 231 and all record type or index 76 CUBs 220 and all page set cursor blocks (PSCBs) 230 on any objects in DBD 77.
5) Drop the DBD 77.

Creating a file descriptor

In creating a file 76 descriptor 77, no SKCT 150 lock is needed since no SKCT can yet be bound to the file, and no page set 76 lock is needed since no page set has yet been created in the file 76.

The procedure is:

1) Lock the target DBD 77 in exclusive mode with commit duration.
3) Build the file 76 OBD 124 in DBD 77.

Deleting a file descriptor

In deleting a file 76 descriptor 77, an SKCT 150 lock is needed to quiesce all concurrent statically bound activities against any object in file 76. The locks are held for at least commit duration, except the lock on the SKCT 150 of the current transaction, which must be held for deallocation duration. Deletion of an SKCT 150 is needed to stop all subsequent activities against any object in the file.

The procedure is:

1) Lock target DBD 77 in exclusive mode with commit duration.
2) Lock the plans (SKCTs) 156, 158 on the target file 142 in exclusive mode with commit or deallocation duration.
3) Delete the plans 156, 158 on the target file 142.
4) Invalidate all record type or index 76 CUBs 220 and all page set PSCBs 230 on the target file 142.
5) Drop the file 142 OBD 126 from the DBD 77.

Altering a file descriptor

In altering a file 140 descriptor no lock on SKCT 152 is needed since no prebound plan 152 will be affected by any allowable updates in file 140 OBD 124.

The procedure is:

1) Lock the target DBD 77 in exclusive mode with commit duration.
2) Lock the page set 76 associated with the target file 140 in exclusive mode with commit duration.
3) Alter the target file 140 OBD 124 in DBD 77.

Creating a record type descriptor

In creating a record type 76 descriptor 77, no SKCT 150 lock is needed since no SKCT 150 can yet be bound to it.

The procedure is:

1) Lock the target DBD 77 in exclusive mode with commit duration.
2) Build the record type 76 OBD 128 in DBD 77.

Deleting a record type descriptor

In deleting a record type 142 descriptor 77, an SKCT 156, 158 lock is need to quiesce all concurrent statically bound activities against the record type. The locks are held for at least commit duration, except the lock on the SKCT 150 of the current transaction, which must be held for deallocation duration. An SKCT 156, 158 deletion is needed to stop all subsequent activities against the record type.

The procedure is:

1) Lock the target DBD 77 in exclusive mode with commit duration.
2) Lock the plans 156, 158 on the target record type 142 in exclusive mode with commit or deallocation duration.
3) Delete all plans 156, 158 on the record type.
4) Invalidate the record type 142 and all index 140 CUBs 220 on the target record type 142.
5) Drop the record type 142 OBD 126 from the DBD 77.

Altering a record type descriptor

In altering a record type 142 descriptor 77, an SKCT 150 lock is needed since no lock is issued on a page set 76 for a partitioned file at allocation time. The locks must be held for at least commit duration, except the lock on the SKCT of the current transaction, which must be held for deallocation duration.

The procedure is:

1) Lock the target DBD 77 in exclusive mode with commit duration.

2) Lock the plans 156, 158 on the target record type 142 in exclusive mode with commit or deallocation duration.

3) Invalidate the record type and all index CUBs 220 on the target record type.

4) Alter the target record type OBD 126 in DBD 77.

Creating an index descriptor

In creating an index 140 descriptor 77, no SKCT 150 lock is needed since no SKCT could have been bound to the index 140. The paage set 142 lock is used to guarantee the consistency of the index chain maintained in DBD 77, which will be followed by DBMS 70 during SQL 90 updating and index maintenance.

The procedure is:

1) Lock the target DBD 77 in exclusive mode with commit duration.

2) Lock the page set 76 associated with the target file in exclusive mode with commit duration.

3) Build the target index OBD 124 in DBD 77.

Deleting an index descriptor

In deleting an index 140 descriptor 77, an SKCT 152 lock is needed to quiesce all concurrent transactions having statically bound CUBs 220 on the index. The locks are held for at least commit duration, except the lock on the SKCT 150 of the current transaction, which must be held for deallocation duration. The SKCT deletion is needed to stop all subsequent explicit use of the index 140. The page set lock is used to guarantee the consistency of the index chain maintained in DBD 77, which will be followed by DBMS 70 during SQL updating and index 140 maintenance.

The procedure is:

1) Lock the target DBD 77 in exclusive mode with commit duration.

2) Lock the plans 152 on the target index in exclusive mode with commit or deallocation duration.

3) Delete all plans 152 on the index 140.

4) Lock the page set 76 associated with the target file in exclusive mode with commit duration.

5) Invalidate all index CUBs 220 on the target index.

6) Drop the index OBD 124 from the DBD 77.

Altering an index descriptor

In altering an index 140 descriptor 77 there is no index page set lock provided. The lock on an index page set is achieved by locking the corresponding file page set. No lock on plan 152 is needed since no prebound plan will be affected by any allowable updates in the index 140 OBD 124.

The procedure is:

1) Lock the target DBD 77 in exclusive mode with commit duration.

2) Lock the page set 144 associated with the target file in exclusive mode with commit duration.

3) Alter the target index OBD 124 in DBD 77.

Creating a file page set descriptor

In creating a file page set 140 descriptor, an SKCT 152 lock is used to protect the file page set chain which is followed during DBMS 70 allocation processes. The locks are held for at least commit duration, except the lock on the SKCT of the current transaction, which must be held for deallocation duration.

The procedure is:

1) Lock the target DBD 77 in exclusive mode with commit duration.

2) Lock the plans 150 on the associated file 144 in exclusive mode with commit or deallocation duration.

3) Build the target file page set 140 OBD 124 in the DBD 77.

Deleting a file page set descriptor

In deleting a file page set 140 descriptor, and SKCT 152 lock is needed, since no lock is issued on page set 140 for a partitioned file at allocation time. The locks must be held for at least commit duration, except the lock on the SKCT 152 of the current transaction, which must be held for deallocation duration. No page set 140 lock is needed since the SKCT 152 lock will prevent definitional change from impacting SQL 90 processing.

The procedure is:

1) Lock the target DBD 77 in exclusive mode with commit duration.

2) Lock the plans 156, 158 on the associated file 152 in exclusive mode with commit or deallocation duration.

3) Invalidate all PSCBs 230 on the target page set 140.

4) Drop the target file page set OBD 124 from DBD 77.

Altering a file page set descriptor

In altering a file page set 140 descriptor, the page set open lock will serialize the open/close of the page set 140 so that no other transaction can retrieve the information contained in OBD 124 while a transaction is changing it.

The procedure is:

1) Lock the target DBD 77 in exclusive mode with commit duration.

2) Lock the open attribute of the associated file page set 140 in exclusive mode with commit duration.

3) Alter the target file page set 140 OBD 124 in the DBD 77.

Creating an index page set descriptor

In creating an index page set 140 descriptor, an SKCT 152 lock is used to guarantee the consistency of the index page set chain during DBMS 70 allocation of CUBs 220 for the given index and also during SQL updating and index maintenance. The locks must be held for at least commit duration, except the lock on the SKCT 152 of the current transaction, which must be held for deallocation duration.

The procedure is:

1) Lock the target DBD 77 in exclusive mode with commit duration.

2) Lock the plans 156, 158 on the associated record type 142 in exclusive mode with commit or deallocation duration.

3) Build the target index page set OBD 124 in DBD 77.

Deleting an index page set descriptor

In deleting an index page set 140 descriptor, an SKCT 152 lock is used to guarantee the consistency of the index page set chain during DBMS 70 allocation of CUBs 220 for the given index 144 and also during SQL 90 updating and index 144 maintenance. The locks are held for at least commit duration, except the lock on the SKCT 152 of the current transaction, which is held for deallocation duration.

The procedure is:

1) Lock the target DBD 77 in exclusive mode with commit duration.

2) Lock the plans 156, 158 on the associated record type 142 in exclusive mode with commit or deallocation duration.

3) Invalidate all PSCBs 230 on the target page set.

4) Drop the target index page set OBD 124 from the DBD 77.

Altering an index page set descriptor

In altering an index page set 140 descriptor, a page set open lock serializes the open/close of the page set so that no other transaction can retrieve information from an OBD 124 while a transaction is changing it.

The procedure is:

1) Lock the target DBD 77 in exclusive mode with commit duration.

2) Lock the open attribute of the target index page set 140 in exclusive mode with commit duration.

3) Alter the target index page set OBD 124 in DBD 77.

## Claims

1. In a computing apparatus reinforcing a relational database having a plurality of database objects and their descriptors,

the method providing for online definition of said descriptors while maintaining the availability of data and descriptors not impacted by a concurrent definitional process including the step of prebinding one or more transactions (101, 103, 153) to reference certain descriptors (77), whereby said plurality of database objects and their descriptors are stored in a logical segment, and characterised by the further steps of:

— determining the domain effected by the definitional process;

— marking invalid to force rebinding of prebound transactions which reference descriptors within the domain effected by the definitional process;

— inhibiting prior-to-commit access by transactions which have not been prebound to all objects within the domain effected by the definitional process: and

thereafter allowing all accesses to objects in the domain;

whereby descriptors outside of the domain are available to all transactions, and read only access is available to prebound transactions referencing descriptors within the domain which are not modified by this concurrent definitional process.

2. The method of claim 1 comprising the further steps of binding a target application plan according to the steps of:

locking a catalog (78) table page in exclusive mode with commit duration;

locking the target plan (150) in exclusive mode with commit duration;

producing target plan sections (210, 240); and

storing the target plan.

3. The method of claim 2 comprising the further steps of executing statement prebound within a plan according to the steps of:

locking the associated plan (150) in shared mode with commit duration;

locking the page set or page which is the target of the statement in shared or exclusive or update mode with commit duration; and

executing the statement (100, 102).

4. The method of claim 1 comprising the further step of executing a dynamic statement according to the steps of:

locking a target database descriptor (77) describing a page set or page which is the target of the statement in shared mode with commit duration;

locking the target page set or page (76) selectively in shared or exclusive or update mode with commit duration; and

executing the statement (100, 102).

5. The method of claim 1, comprising the further step of executing a utility job according to the steps of:

locking the target database descriptor (77) in exclusive mode with commit duration;

setting an utility-in-process flag in the target database descriptor;

locking a target page set or page (76) selectively in shared or exclusive or update mode with commit duration; and

doing the utility process.

6. The method of claim 1 comprising the further step of creating a new database descriptor according to the steps of:

locking the database identifier generator in exclusive mode with commit duration;

allocating a database identifier to the new database descriptor (77); and

building the new database descriptor.

7. The method of claim 6 comprising the further step of deleting a target database descriptor according to the steps of:

lock the target database descriptor (77) in exclusive mode with deallocation duration;

locking the plans (150) which reference the target database descriptor in exclusive mode with commit or deallocation duration;

deleting the plans referencing all files referenced by the target database descriptor;

invalidating all record type or index cursor blocks (220) and all page set cursor blocks (230) referencing any objects in the target database descriptor; and

dropping the target database descriptor.

8. The method of claim 1 comprising the further step of creating a file descriptor according to the steps of:

locking a target database descriptor (77) in which the file descriptor is to be created in exclusive mode with commit duration; and

building the file descriptor (124) in the target database descriptor.

9. The method of claim 8 comprising the further step of deleting a target file descriptor according to the steps of:

locking the target database descriptor (77) containing the target file descriptor in exclusive mode with commit duration;

locking all target plans (156, 158) referencing the target file (142) described by the target file descriptor to be deleted in exclusive mode with commit or deallocation duration;

deleting all plans (156, 158) referencing the target file;

invalidating all record type or index cursor blocks (220) referencing the target file; and

dropping the target file descriptor (126) from the target database descriptor.

10. The method of claim 9 comprising the further step of altering a target file descriptor according to the steps of:

locking the database descriptor (77) containing the target file descriptor in exclusive mode with commit duration;

locking the page set (76) associated with the file (140) described by the target file descriptor (124) in exclusive mode with commit duration; and

altering the target file descriptor (124).

11. The method of claim 1 comprising the further step of creating a record type descriptor according to the steps of:

locking the database descriptor (77) to contain the record type descriptor in exclusive mode with commit duration; and

building the record type descriptor (128).

12. The method of claim 11 comprising the further step of deleting a record type descriptor according to the steps of:

locking the database descriptor (77) containing the record type descriptor to be deleted in exclusive mode with commit duration;

locking target plans (156, 158) referencing the record type described by the record type descriptor to be deleted in exclusive mode with commit or deallocation duration;

deleting all target plans;

invalidating the record type (142) and all index cursor blocks (220) referencing the record type described by the record type descriptor (126) to be deleted; and

dropping the record type descriptor (126) being deleted from its database descriptor.

13. The method of claim 11 comprising the further step of altering a target record type descriptor according to the steps of:

locking the database descriptor containing the target record type descriptor in exclusive mode with commit duration;

locking plans (156, 158) referencing the target record type descriptor (126) in exclusive mode with commit or deallocation duration;

invalidating the record type (142) and all index cursor blocks (220) referencing the target record type descriptor; and

altering the target record type descriptor.

14. The method of claim 1 comprising the further step of creating an index descriptor according to the steps of:

locking the database descriptor (77) to contain the index descriptor in exclusive mode with commit duration;

locking the page set (76) associated with the file to be indexed in the index (140) to be described by the index descriptor being created in exclusive mode with commit duration; and

building the index descriptor (124) being created.

15. The method of claim 14 comprising the further step of deleting a target index descriptor according to the steps of:

locking the database descriptor (77) from which the target index descriptor (124) is to be deleted in exclusive mode with commit duration;

locking all plans (152) referencing the target index in exclusive mode with commit or deallocation duration;

deleting all plans (152) referencing the target index descriptor;

locking the page set (76) associated with the file indexed by the index described by the target index descriptor in exclusive mode with commit duration;

invalidating all index cursor blocks (220) referencing the target index descriptor; and

dropping the target index descriptor (124).

16. The method of claim 14 comprising the further step of altering a target index (140) descriptor (124) according to the steps of:

locking the database descriptor (77) containing the target index descriptor in exclusive mode with commit duration;

locking the page set (144) associated with the file indexed by the index described by the target index descriptor in exclusive mode with commit duration; and

altering the target index descriptor (124).

17. The method of claim 1 comprising the further step of creating a file page set (140) descriptor according to the steps of:

locking the database descriptor (77) to contain the file page set descriptor in exclusive mode with commit duration;

locking the plans (150) referencing the file (144) associated with the file page set (140) to be described in exclusive mode with commit or deallocation duration; and

building the file page descriptor (124) being created in the database descriptor.

18. The method of claim 17 comprising the further step of deleting a file page set descriptor according to the steps of;

locking the database descriptor (77) containing the file page set descriptor (124) to be deleted in exclusive mode with commit duration;

locking the plans referencing the file page set descriptor to be deleted in exclusive mode with commit or deallocation duration;

invalidating all page set cursor blocks (230) referencing the file page set (140) descriptor being deleted; and

dropping the file page set descriptor (124) from its data-base descriptor.

19. The method of claim 17 comprising the further step of altering a page set (140) descriptor according to the steps of:

locking the database descriptor (77) containing the page set descriptor to be altered in exclusive mode with commit duration;

locking the open attribute of the file page set associated with the page set descriptor to be altered in exclusive mode with commit duration; and

altering the page set descriptor (124).

20. The method of claim 1 comrising the further step of creating an index page set (140) descriptor according to the steps of:

locking the database descriptor (77) to contain the index page set descriptor being created in exclusive mode with commit duration;

locking the plans (156, 158) referencing the record type (142) associated with the index page set to be described by the index page set descriptor being created in exclusive mode with commit or deallocation duration; and

building the index page set descriptor (124) in the data-base descriptor.

21. The method of claim 20 comprising the further step of deleting an index page set (140) descriptor according to the steps of:

locking the database descriptor (77) containing the index page set descriptor to be deleted in exclusive mode with commit duration;

locking the plans (156, 158) referencing record types (142) associated with the index page set descriptor being deleted in exclusive mode with commit or deallocation duration;

invalidating all page set cursor blocks (230) referencing the page set indexed by the index described in the index page set descriptor being deleted; and

dropping the index page set descriptor (124) being deleted from its database descriptor.

22. The method of claim 20 comprising the further step of altering an index page set (140) descriptor according to the steps of:

locking the database descriptor (77) containing the index page set descriptor to be altered in exclusive mode with commit duration;

locking the open attribute of the index page set described by the index page set (140) descriptor to be altered in exclusive mode with commit duration; and

altering the index page set descriptor (124).

23. A computing apparatus for managing a database including means for executing user transactions and a database storage means for storing a relational database having a plurality of database objects and their descriptors referenced by the transactions said apparatus including:

means for prebinding one or more transactions (101, 103, 153) to reference certain descriptors (77); and

means for processing during a current definitional process a database object descriptor while maintaining the availability of data (76) and descriptors not impacted by the current definitional process; and characterised by

means for determining the domain effected by the definitional process;

means for forcing rebinding of prebound transactions which reference descriptors within the domain effected by the definitional process; and

means for inhibiting prior-to-commit access by transactions which have not been prebound to all objects within the domain effected by the definitional process whereby the apparatus includes means for providing for online definition of descriptors while maintaining the availability of data and descriptors not impacted by a current definitional process.

**Patentansprüche**

1. In einem Datenverarbeitungsgerät, bezugnehmend auf eine relationale Datenbank mit einer Vielzahl von Datenbankobjekten und ihren Deskriptoren,

wobei die Methode eine Online-Definition der genannten Deskriptoren bei gleichzeitiger Aufrechterhaltung der Verfügbarkeit von Daten und Deskriptoren, die nicht von einem gleichlaufenden Definitionsvorgang berührt werden, vorsieht, und den Schritt der Vorbindung einer oder mehrerer Transaktionen (101, 103, 153) zum Ansprechen bestimmter Deskriptoren (77) enthält, wobei die genannte Vielzahl von Datenbankobjekten und ihre Deskriptoren in einem logischen Segment gespeichert sind, und gekennzeichnet durch die folgenden weiteren Schritte:

— Bestimmung des vom Definitionsprozess betroffenen Bereichs;

— Ungültigmarkierung zum Erzwingen der Neubingung von vorgebundenen Transaktionen, welche auf Deskriptoren innerhalb des von dem Definitionsprozess betroffenden Bereichs Bezug nehmen;

— Sperrung des Vorübertragungszugangs durch Transaktionen, welche nicht an alle Objekte innerhalb des von dem Definitionsprozess betroffenen Bereichs vorgebunden worden sind, und

— daraufhin Ermöglichung aller Zugänge zu Objekten im Bereich, wobei Deskriptoren ausserhalb des Bereichs für alle Transaktionen verfügbar sind, und Festspeicherzugang für vorgebundene Transaktionen verfügbar ist, welche Deskriptoren innerhalb des Bereichs ansprechen, die durch diesen gleichlaufenden Definitionsprozess nicht verändert werden.

2. Methode nach Anspruch 1, enthaltend die weiteren Schritte der Bindung eines Zielanwendungsplans entsprechend den Schritten von:

Sperren einer Katalogtischseite (78) im Exklusivmodus mit Übertragungsdauer;

Sperren des Zielplans (150) im Exklusivmodus mit Übertragungsdauer;

Erzeugung von Zielplanabschnitten (210, 240); und

Speicherung des Zielplans.

3. Methode nach Anspruch 2, enthaltend die weiteren Schritte zur Ausführung einer innerhalb eines Plans vorgebundenen Anweisung entsprechend den folgenden Schritten:

Sperren des zugeordneten Plans (150) im Gemeinschaftmodus mit Übertragungsdauer;

Sperren des Seitensatzes oder der Seite, welche das Ziel der Anweisung in Gemeinschafts-, Exklusiv- oder Aktualisierungsmodus mit Übertragungsdauer ist; und

Ausführung der Anweisung (100, 102).

4. Method nach Anspruch 1, enthaltend den weiteren Schritt zur Ausführung einer dynamischen Anweisung entsprechend den folgenden Schritten:

Sperrung eines Zeildatenbank-Deskriptors (77) beschreibend einen Seitensatz oder eine Seite, welche das Zeil der Anweisung im Gemeinschaftmodus mit Übertragungsdauer ist;

Sperrung des Zielseitensatzes oder der Seite (76) auf selektive Weise im Gemeinschafts- oder Exklusiv- oder Aktualisierungsmodus mit Übertragungsdauer; und

Ausführung der Anweisung (100, 102).

5. Methode nach Anspruch 1, enthaltend die weiteren Schritte zur Ausführung eines Dienstauftrags entsprechend den folgenden Schritten:

Sperrung des Zieldatenbank-Deskriptors (77) im Exklusivmodus mit Übertragungsdauer;

Setzen einer Dienstprogramm-in-Bearbeitungsflagge im Zieldatenbank-Deskriptor;

Sperrung eines Zielseitensatzes oder einer Seite (76) auf selektive Weise im Gemeinschafts- oder Exklusiv- oder Aktualisierungsmodus mit Übertragungsdauer; und

Ausführen der Dienstprogrammbearbeitung.

6. Methode nach Anspruch 1, enthaltend die weiteren Schritte zur Schaffung eines neuen Datenbank-Deskriptors entsprechend den folgenden Schritten:

Sperrung des Datenbankidentifizierungsgenerators im Exklusivmodus mit Übertragungsdauer;

Zuordnung einer Datenbankidentifizierung zum neuen Datenbank-Deskriptor (77); und

Aufbau des neuen Datenbank-Deskriptors.

7. Methode nach Anspruch 6, enthaltend die weiteren Schritte zum Löschen eines Datenbank-Deskriptors entsprechend den folgenden Schritt:

Sperrung des Datenbank-Deskriptors (77) im Exklusivmodus mit Freigabedauer;

Sperrung der Pläne (150), welche auf den Zeildatenbank-Deskriptor im Exklusivmodus mit Übertragungs- oder Freigabedauer Bezug nehmen;

Löschen der Pläne, welche auf alle vom Zieldatenbank-Deskriptor angesprochenen Dateien Bezug nehmen;

Unwirksammachung aller Satzarten oder Indexcursorblöcke (220) und aller Seitensatzcursorblöcke (230), welche irgendwelche Objekte in dem Zieldatenbank-Deskriptor ansprechen; und

Beseitigung des Zieldatenbank-Deskriptors.

8. Methode nach Anspruch 1, enthaltend den weiteren Schritt zur Schaffung eines Datei-Deskriptors entsprechend den folgenden Schritten:

Sperrung des Zieldatenbank-Deskriptors (77), in welchem der Datei-Deskriptor im Exklusivmodus mit Übertragungsdauer erzeugt werden muss; und

Aufbau des Datei Deskriptors (124) im Zieldatenbank-Deskriptor.

9. Methode nach Anspruch 8, enthaltend den weiteren Schritt zum Löschen eines Zeildatei-Deskriptors entsprechend den folgenden Schritten:

Sperrung des Zieldatenbank-Deskriptors (77), welcher den Zeildatei-Deskriptor im Exklusivmodus mit Übertragungsdauer enthält;

Sperrung aller Zielpläne (156, 158), welche die vom Zeildatei-Deskriptor zur Löschung im Exklusivmodus mit Übertragungs- oder Freigabedauer beschriebene Zieldatei (142) ansprechen;

Löschen aller Pläne (156, 158), welche die Zieldatei ansprechen;

Unwirksammachung aller Satzarten oder Indexcursorblöcke (220), welche die Zeildatei ansprechen; und

Beseitigung des Zieldatei-Deskriptors (126) aus dem Zeildatenbank-Deskriptor.

10. Methode nach Anspruch 9, enthaltend den weiteren Schritt der Änderung eines Zieldatei-Deskriptors entsprechend den folgenden Schritten:

Sperrung des Datenbank-Deskriptors (77), enthaltend den Zieldatei-Deskriptor im Exklusivmodus mit Übertragungsdauer;

Sperrung des Seitensatzes (76), welcher der durch den Zieldatei-Deskriptor (124) im Exklusivmodus mit Übertragungsdauer beschriebenen Datei (140) zugeordnet ist; und

Veränderung des Zieldatei-Deskriptors (124).

11. Methode nach Anspruch 1, enthaltend den weiteren Schritt zur Schaffung eines Satzart-Deskriptors entsprechend den folgenden Schritten:

Sperrung des Datenbank-Deskriptors (77), zum Enthalten des Satzart-Deskriptors im Exklusivmodus mit Übertragungsdauer; und

Aufbau des Satzart-Deskriptors (128).

12. Methode nach Anspruch 11, enthaltend den weiteren Schritt zum Löschen eines Satzart-Deskriptors entsprechend den folgenden Schritten:

Sperrung des Datenbank-Deskriptors (77), welcher den Satzart-Deskriptor enthält, der im Exklusivmodus mit Übertragungsdauer gelöscht werden muss;

Sperrung von Zielplänen (156, 158), welche die Satzart ansprechen, die von dem im Exklusivmodus mit Übertragungs- oder Freigabedauer zu löschenden Satzart-Deskriptor beschrieben wird;

Löschen aller Zielplane;

Unwirksammachung der Satzart (142) und aller Indexcursorblöcke (220), welche die von dem zu löschenden Satzart-Deskriptor (126) beschriebene Satzart ansprechen; und

Beseitigung des im Löschen begriffenen Satzart-Deskriptors (126) von seinem Datenbank-Deskriptor.

13. Methode nach Anspruch 1, enthaltend den weiteren Schritt zur Veränderung eines Zielsatzart-Deskriptors entsprechend den folgenden Schritten:

Sperrung des Datenbank-Deskriptors, welcher den Zeilsatzart-Deskriptor im Exklusivmodus mit Übertragungsdauer enthält;

Löschen von Plänen (156, 158), welche den Zielsatzart-Deskriptor (126) im Exklusivmodus mit Übertragungs- oder Freigabedauer ansprechen;

Unwirksammachung der Satzart (142) und aller Indexcursorblöcke (220), welche den Zielsatzart-Deskriptor ansprechen; und

Veränderung des Zielsatzart-Deskriptors.

14. Methode nach Anspruch 1, enthaltend den weiteren Schritt der Schaffung eines Index-Deskriptors entsprechend den folgenden Schritten:

Sperrung des Datenbank-Deskriptors (77) zum Enthalten des Index-Deskriptors im Exklusivmodus mit Übertragungsdauer;

Sperrung des Seitensatzes (76), welcher der Datei zugeordnet ist, die im Index (140) indexiert werden muss, welcher von dem in Exklusivmodus mit Übertragungsdauer im Entstehen begriffenen Index-Deskriptor beschrieben werden muss; und

Aufbau des im Entstehen begriffenden Index-Deskriptors (124).

15. Methode nach Anspruch 14, enthaltend den weiteren Schritt der Löschung eines Zeilindex-Deskriptors entsprechend den folgenden Schritten:

Sperrung des Datenbank-Deskriptors (77), von welchem der Zielindex-Deskriptor (124) im Exklusivmodus mit Übertragungsdauer gelöscht werden muss;

Sperrung aller Pläne (152), welche den Zielindex im Exklusivmodus mit Übertragungs- oder Freigabedauer ansprechen;

Löschen aller Pläne (152), welche den Zielindex-Deskriptor ansprechen;

Sperrung des Seitensatzes (76), welcher der von dem durch den Zielindex-Deskriptor im Exklusionsmodus mit Übertragungsdauer beschriebenen Index indexierten Datei zugeordnet ist;

Unwirksammachung aller Indexcursorblöcke (220), welche den Zielindex-Deskriptor ansprechen; und Beseitigung des Zielindex-Deskriptors (124).

16. Methode nach Anspruch 14, enthaltend den weiteren Schritt der Veränderung eines Zielindex- (140) Deskriptors (124) entsprechend den folgenden Schritten:

Sperrung des Datenbank-Deskriptors (77), welcher den Zielindex-Deskriptor im Exklusivmodus mit Übertragungsdauer enthält;

Sperrung des Seitensatzes (144), der Datei zugeordnet, die durch den von dem Zielindex-Deskriptor im Exklusivmodus mit Übertragungsdauer beschriebenen Index indexiert wird; und

Veränderung des Zeilindex-Deskriptors (124).

17. Methode nach Anspruch 1, enthaltend den weiteren Schritt zur Schaffung eines Dateiseitensatz- (140) Deskriptors entsprechend den folgenden Schritten:

Sperrung des Datenbank-Deskriptors (77) zum Enthalten des Dateiseitensatz-Deskriptors im Exklusivmodus mit Übertragungsdauer;

Sperrung der Pläne (150), welche die dem Dateiseitensatz (140), welcher im Exklusivmodus mit Übertragungs- oder Freigabedauer beschrieben werden muss, zugeordnete Datei (144) ansprechen; und

Aufbau des Dateiseitensatz-Deskriptors (124), welcher im Datenbank-Deskriptor im Entstehen begriffen ist.

18. Methode nach Anspruch 17, enthaltend den weiteren Schritt zum Löschen eines Dateiseitensatz-Deskriptors entsprechend den folgenden Schritten:

Sperrung des Datenbank-Deskriptors (77), welcher den zu löschenden Dateiseitensatz-Deskriptor (124) im Exklusivmodus mit Übertragungsdauer enthält;

Sperrung der Pläne, welcher den zu löschenden Dateiseitensatz-Deskriptor im Exklusivmodus mit Übertragungs- oder Freigabedauer ansprechen;

Unwirksammachung aller Seitensatzcursorblöcke (230), welche den im Löschen begriffenen Dateiseitensatz- (140) Deskriptor ansprechen;

un Beseitigung des Dateiseitensatz-Deskriptors (124) von seinem Datenbank-Deskriptor.

19. Methode nach Anspruch 17, enthaltend den weiteren Schritt zur Veränderung eines Seitensatz- (140) Deskriptors entsprechend den folgenden Schritten:

Sperrung des Datenbank-Deskriptors (77), welcher den im Exklusivmodus mit Übertragungsdauer zu ändernden Seitensatz-Deskriptor enthält;

Sperrung des offenen Attributs des Dateiseitensatzes, welcher dem im Exklusivmodus mit Übertragungsdauer zu ändernden Seitensatz-Deskriptor zugeordnet ist; und

Veränderung des Seitensatz-Deskriptors (124).

20. Methode nach Anspruch 1, enthaltend den weiteren Schritt zur Schaffung eines Indexseitensatz- (140) Deskriptors entsprechend den folgenden Schritten:

Sperrung des Datenbank-Deskriptors (77) zum Enthalten des Indexseitensatz-Deskriptors, welcher im Exklusivmodus mit Übertragungsdauer im Entstehen begriffen ist;

Sperrung der Pläne (156, 158), welche die Satzart (142) ansprechen, die dem Indexseitensatz zugeordnet sind, welcher durch den im Exklusivmodus mit Übertragungs- oder Freigabedauer im Entstehen begriffenen Indexseitensatz-Deskriptor beschrieben werden muss; und

Aufbau des Indexseitensatz-Deskriptors (124) im Datenbank-Deskriptor.

21. Methode nach Anspruch 20, enthaltend den weiteren Schritt zum Löschen eines Indexseitensatz- (140) Deskriptors entsprechend den folgenden Schritten:

Sperrung des Datenbank-Deskriptors (77), welcher den zu löschenden Indexseitensatz-Deskriptor im Exklusivmodus mit Übertragungsdauer enthält;

Sperrung der Pläne (156, 158), welche auf Satzarten (142) ansprechen, die dem im Exklusivmodus mit Übertragungs- oder Freigabedauer im Löschen begriffenen Indexseitensatz-Deskriptor zugeordnet sind;

Unwirksammachung aller Seitensatzcursorblöcke (230), welche den Seitensatz Ansprechen, der von dem in Löschen begriffenen Indexseitensatz-Deskriptor beschriebenen Index indexiert wird: und

Beseitigung des im Löschen begriffenen Indexseitensatz Deskriptors (124) von seinem Datenbank-Deskriptor.

22. Methode nach Anspruch 20, enthaltend den weiteren Schritt zur Veränderung eines Indexseitensatz- (140) Deskriptors entsprechend den folgenden Schritten:

Sperrung des Datenbank-Deskriptors (77), welcher den zu änderen Indexseitensatz-Deskriptor im Exklusivmodus mit Übertragungsdauer enthält;

Sperrung des offenen Attributs des von dem zu verändernden Indexseitensatz (140) Deskriptor im Exklusivmodus mit Übertragungsdauer beschriebenen Indexseitensatzes; und

Veränderung des Indexseitensatz-Deskriptors (124).

23. Datenverarbeitungsgerät zum Verwalten einer Datenbank, enthaltend Mittel zur Ausführung von Benutzertransaktionen und Datenbankspeichermittel zum Speichern einer relationalen Datenbank mit einer Vielzahl von Datenbankobjekten und ihren Deskriptoren, die durch die Transaktionen angesprochen werden, wobei das genannte Gerät folgendes enthält:

Mittel zur Vorbindung einer oder mehrerer Transaktionen (101, 103, 153) zum Ansprechen bestimmter Deskriptoren (77);

Mittel zur Verarbeitung während eines aktuellen Definitionsprozesses eines Datenbankobjekt-Deskriptors bei gleichzeitiger Aufrechterhaltung der Verfügbarkeit von Daten (76) und Deskriptoren, die von dem aktuellen Definitionsprozess nicht berührt werden; und gekennzeichnet durch

Mittel zur Bestimmung des von dem Definitionsprozess betroffenen Bereichs;

Mittel zum Erzwingen der Neubindung von vorgebundenen Transaktionen, welche auf Deskriptoren innerhalb des von dem Definitionsprozess betroffenen Bereichs Bezug nehmen; und

Mittel zur Sperrung des Vorübertragungszugangs durch Transaktionen, welche nicht an alle Objekte innerhalb des von dem Definitionsprozess betroffenen Bereichs vorgebunden worden sind, wobei das Gerät Mittel zur Bereitstellung einer Online-Definition von Deskriptoren bei gleichzeitiger Aufrechterhaltung der Verfügbarkeit von nicht durch den aktuellen Definitionsprozess berührten Daten und Deskriptoren beinhaltet.

**Revendications**

1. Dans un appareil informatique consultant une base de données relationnelles possédant une pluralité d'objets de base de données et leurs descripteurs,

le procédé procurant une définition en direct desdits descripteurs tout en conservant la disponibilité des données et des descripteurs non touchés par un traitement de définition simultané, comprenant l'opération de préliaison d'une ou plusieurs transactions (101, 103, 153) pour désigner certains descripteurs (77), de sorte que ladite pluralité d'objets de base de données et leurs descripteurs sont stockés dans un segment logique, et caractérisé par les opérations supplémentaires de:

détermination du domaine concerné par le traitement de définition;

marquage d'invalidation pour une nouvelle liaison forcée des transactions préliées qui renvoient à des descripteurs à l'intérieur du domaine concerné par le traitement de définition;

empêchement de l'accès avant engagement, par des transactions qui n'ont pas été préliées, à tous les objets à l'intérieure du domaine concerné par le traitement de définition; et

ensuite, autorisation de tous les accès aux objets dans le domaine;

de sorte que les descripteurs à l'extérieur du domaine sont disponibles pour toutes les transactions, et un accès pour consultation seulement est disponible pour les transactions préliées désignant des descripteurs à l'intérieur du domaine qui ne sont pas modifiés par ce traitement de définition simultané.

2. Procédé suivant la revendication 1 comprenant les opérations supplémentaires de liaison d'un plan d'application visé conformément aux opérations de:

verrouillage d'une page de table de catalogue (78) en mode exclusif avec la durée d'engagement;

verrouillage du plan visé (150) en mode exclusif avec la durée d'engagement;

production de sections (210, 240) du plan visé; et

stockage du plan visé.

3. Procédé suivant la revendication 2, comprenant les opérations supplémentaires d'exécution d'une instruction préliée dans un plan conformément aux opérations de:

verrouillage du plan associé (150) en mode partagé avec la durée d'engagement;

verrouillage de l'ensemble de page ou de la page qui est la cible de l'instruction en mode partagé ou exclusif ou de mise à jour avec la durée d'engagement; et

exécution de l'instruction (100, 102).

4. Procédé suivant la revendication 1, comprenant l'opération supplémentaire d'exécution d'une instruction dynamique conformément aux opérations de:

verrouillage d'un descripteur de base de données visé (77) décrivant un ensemble de page ou une page qui est la cible de l'instruction en mode partagé avec la durée d'engagement;

verrouillage de l'ensemble de page ou de la page visé (76) sélectivement en mode partagé ou exclusif ou de mise à jour avec la durée d'engagement; et

exécution de l'instruction (100, 102).

5. Procédé suivant la revendication 1, comprenant l'opération supplémentaire d'exécution d'une tâche utilitaire conformément aux opérations de:

verrouillage du descripteur de base de données visé (77) en mode exclusif avec la durée d'engagement;

établissement d'un drapeau de tâche utilitaire en cours, dans le descripteur de base de données visé;

verrouillage d'un ensemble de page ou d'une page visé (76) sélectivement en mode partagé ou exclusif ou de mise à jour avec la durée d'engagement; et

exécution du traitement utilitaire.

6. Procédé suivant la revendication 1, comprenant en outre l'opération de création d'un nouveau descripteur de base de données conformément aux opérations de:

verrouillage du générateur d'identificateur de base de données en mode exclusif avec la durée d'engagement;

allocation d'un identificateur de base de données au nouveau descripteur de base de données (77); et construction du nouveau descripteur de base de données.

7. Procédé suivant la revendication 6, comprenent en outre l'opération d'effacement d'un descripteur de base de données visé conformément aux opérations de:

verrouillage du descripteur de base de données visé (77) en mode exclusif avec la durée de désaffectation;

verrouillage des plans (150) qui renvoient au descripteur de base de données visé en mode exclusif avec la durée d'engagement ou de désaffectation;

effacement des plans qui renvoient à tous les fichiers références par le descripteur de base de données visé;

invalidation de tous les blocs de curseur d'enregistrement ou d'index (220) et de tous les blocs de curseur d'ensemble de page (230) désignant des objets quelconques dans le descripteur de base de données visé; et

élimination du descripteur de base de données visé.

8. Procédé suivant la revendication 1, comprenant en outre l'opération de création d'un descripteur de fichier conformément aux opérations de:

verrouillage d'un descripteur de base de données visé (77) dans lequel le descripteur de fichier doit être créé en mode exclusif avec la durée d'engagement; et

construction du descripteur de fichier (124) dans le descripteur de base de données visé.

9. Procédé suivant la revendication 8, comprenant en outre l'opération d'effacement d'un descripteur de fichier visé conformément aux opérations de:

verrouillage du descripteur de base de données visé (77) contenant le descripteur de fichier visé en mode exclusif avec la durée d'engagement;

verrouillage de tous les plans visés (156, 158) renvoyant au fichier visé (142) décrit par le descripteur de fichier visé à effacer en mode exclusif avec la durée d'engagement ou de désaffectation;

effacement de tous les plans (156, 158) qui renvoient au fichier visé;

invalidation de tous les blocs de curseur d'enregistrement ou d'index 220 qui désignent le fichier visé; et

élimination du descripteur de fichier visé (126) dans le descripteur de base de données visé.

10. Procédé suivant la revendication 9, comprenant en outre l'opération de modification d'un descripteur de fichier visé conformément aux opérations de:

verrouillage du descripteur de base de données (77) contenant le descripteur de fichier visé en mode exclusif avec la durée d'engagement;

verrouillage de l'ensemble de page (76) associé au fichier (140) décrit par le descripteur de fichier visé (124) en mode exclusif avec la durée d'engagement; et

modification du descripteur de fichier visé (124).

11. Procédé suivant la revendication 1, comprenant en outre l'opération de création d'un descripteur de type d'enregistrement conformément aux opérations de:

verrouillage du descripteur de base de données (77) devant contenir le descripteur de type d'enregistrement en mode exclusif avec la durée d'engagement; et

construction du descripteur de type d'enregistrement (128).

12. Procédé suivant la revendication 11, comprenant en outre l'opération d'effacement d'un descripteur de type d'enregistrement conformément aux opérations de:

verrouillage du descripteur de base de données (77) contenant le descripteur de type d'enregistrement à effacer en mode exclusif avec la durée d'engagement;

verrouillage des plans visés (156, 158) renvoyant au type d'enregistrement décrit par le descripteur de type d'enregistrement à effacer en mode exclusif avec la durée d'engagement ou de désaffectation;

effacement de tous les plans visés;

invalidation du type d'enregistrement (142) et de tous les blocs de curseur d'index (220) désignant le type d'enregistrement décrit par le descripteur de type d'enregistrement (126) à effacer; et

élimination du descripteur de type d'enregistrement (126) effacé de son descripteur de base de données.

13. Procédé suivant la revendication 11, comprenant en outre l'opération de modification d'un descripteur de type d'enregistrement visé conformément aux opérations de:

verrouillage du descripteur de base de données contenant le descripteur de type d'enregistrement visé en mode exclusif avec la durée d'engagement;

verrouillage des plans (156, 158) renvoyant au descripteur de type d'enregistrement visé (126) en mode exclusif avec la durée d'engagement ou de désaffectation;

invalidation du type d'enregistrement (142) et de tous les blocs de curseur d'index (220) désignant le descripteur de type d'enregistrement visé; et

modification du descripteur de type d'enregistrement visé.

14. Procédé suivant la revendication 1, comprenant en outre l'opération de création d'un descripteur d'index conformément aux opération de:

verrouillage du descripteur de base de données (77) devant contenir le descripteur d'index en mode exclusif avec la durée d'engagement;

verrouillage de l'ensemble de page (76) associé au fichier à indexer dans l'index (40) à décrite par le descripteur d'index en cours de création en mode exclusif avec la durée d'engagement; et

construction du descripteur d'index (124) à créer.

15. Procédé suivant la revendication 14, comprenant en outre l'opération d'effacement d'un descripteur d'index visé conformément aux opérations de:

verrouillage du descripteur de base de données (77) duquel le descripteur d'index visé (124) doit être effacé en mode exclusif avec la durée d'engagement;

verrouillage de tous les plans (152) renvoyant à l'index visé en mode exclusif avec la durée d'engagement ou de désaffectation;

effacement de tous les plans (152) renvoyant au descripteur d'index visé;

verrouillage de l'ensemble de page (76) associé au fichier indexé par l'index décrit par le descripteur d'index visé en mode exclusif avec la durée d'engagement;

invalidation de tous les blocs de curseur d'index (220) renvoyant au descripteur d'index visé; et élimination du descripteur d'index visé (124).

16. Procédé suivant la revendication 14, comprenant en outre l'opération de modification d'un descripteur (124) d'index visé (140) conformément aux opérations de:

verrouillage du descripteur de base de données (77) contenant le descripteur d'index visé en mode exclusif avec la durée d'engagement;

verrouillage de l'ensemble de page (144) associé au fichier indexé par l'index décrit par le descripteur d'index visé en mode exclusif avec la durée d'engagement; et

modification du descripteur d'index visé (124).

17. Procédé suivant la revendication 1, comprenant en outre l'opération de création d'un descripteur d'ensemble de page de fichier (140) conformément aux opérations de:

verrouillage du descripteur de base de données (77) devant contenir le descripteur d'ensemble de page de fichier en mode exclusif avec la durée d'engagement;

verrouillage des plans (150) qui renvoient au fichier (144) associé à l'ensemble de page de fichier (140) à décrire en mode exclusif avec la durée d'engagement ou de désaffectation; et

construction du descripteur d'ensemble de page de fichier (124) à créer dans le descripteur de base de données.

18. Procédé suivant la revendication 17, comprenant en outre l'opération d'effacement d'un descripteur d'ensemble de page de fichier conformément aux opérations de:

verrouillage du descripteur de base de données (77) contenant le descripteur d'ensemble de page de fichier (124) à effacer en mode exclusif avec la durée d'engagement;

verrouillage des plans qui renvoient au descripteur d'ensemble de page de fichier à effacer en mode exclusif avec la durée d'engagement ou de désaffectation;

invalidation de tous les blocs de curseur d'ensemble de page (230) désignant le descripteur d'ensemble de page de fichier (140) à effacer; et

élimination du descripteur d'ensemble de page de fichier (124) de son descripteur de base de données.

19. Procédé suivant la revendication 17, comprenant en outre l'opération de modification d'un descripteur d'ensemble de page (140) conformément aux opérations de:

verrouillage du descripteur de base de données (77) contenant le descripteur d'ensemble de page à modifier en mode exclusif avec la durée d'engagement;

verrouillage de l'attribut d'ouverture de l'ensemble de page de fichier associé au descripteur d'ensemble de page à modifier en mode exclusif avec la durée d'engagement; et

modification du descripteur d'ensemble de page (124).

20. Procédé suivant la revendication 1, comprenant en outre l'opération de création d'un descripteur d'ensemble de page d'index (140) conformément aux opérations de:

verrouillage du descripteur de base de données (77) devant contenir le descripteur d'ensemble de page d'index à créer en mode exclusif avec la durée d'engagement;

verrouillage des plans (156, 158) renvoyant au type d'enregistrement (142) associé à l'ensemble de page d'index à décrire par le descripteur d'ensemble de page d'index en cours de création en mode exclusif avec la durée d'engagement ou désaffectation; et

construction du descripteur d'ensemble de page d'index (124) dans le descripteur de base de données.

21. Procédé suivant la revendication 20, comprenant en outre l'opération d'effacement d'un descripteur d'ensemble de page d'index (140) conformément aux opérations de:

verrouillage du descripteur de base de données (77) contenant le descripteur d'ensemble de page d'index à effacer en mode exclusif avec la durée d'engagement;

verrouillage des plans (156, 158) renvoyant à des types d'enregistrement (142) associés au descripteur d'ensemble de page d'index à effacer en mode exclusif avec la durée d'engagement ou de désaffectation;

invalidation de tous les blocs de curseur d'ensemble de page (230) désignant l'ensemble de page indexé par l'index décrit dans le descripteur d'ensemble de page d'index en cours d'effacement; et

élimination du descripteur d'ensemble de page d'index (124) à effacer de son descripteur de base de données.

22. Procédé suivant la revendication 20, comprenant en outre l'opération de modification d'un descripteur d'ensemble de page d'index (140) conformément aux opérations de:

verrouillage du descripteur de base de données (77) contenant le descripteur d'ensemble de page d'index à modifier en mode exclusif avec la durée d'engagement;

verrouillage de l'attribut d'ouverture de l'ensemble de page d'index décrit par le descripteur d'ensemble de page d'index (140) à modifier en mode exclusif avec la durée d'engagement; et

modification du descripteur d'ensemble de page d'index (124).

23. Appareil informatique pour la gestion d'une base de données comprenant des moyens pour exécuter des transactions d'utilisateur et des moyens de stockage de base de données pour stocker une base de données relationnelles comportant une pluralité d'objets de base de données et leurs descripteurs référencés par les transactions, ledit appareil comprenant:

des moyens pour effectuer la pré-liaison d'une ou plusieurs transactions (101, 103, 153) renvoyant à certains descripteurs (77); et

des moyens pour le traitement, pendant une opération de définition en cours, d'un descripteur d'objet de base de données tout en maintenant la disponibilité des données (76) et des descripteurs non touchés par l'opération de définition en cours; et étant caractérisé par:

des moyens pour déterminer le domaine concerné par l'opération de définition;

des moyens pour forcer une nouvelle liaison des transactions pré-liées qui renvoient à des descripteurs à l'intérieur du domaine concerné par l'opération de définition; et

des moyens pour empêcher l'accès avant engagement, par des transactions qui n'ont pas été pré-liées, à tous les objets à l'intérieur du domaine concerné par l'opération dedéfinition, de sorte que l'appareil comprend des moyens qui permettent la définition en direct de descripteurs tout en conservant la disponibilité des données et des descripteurs non touchés par une opération de définition en cours.

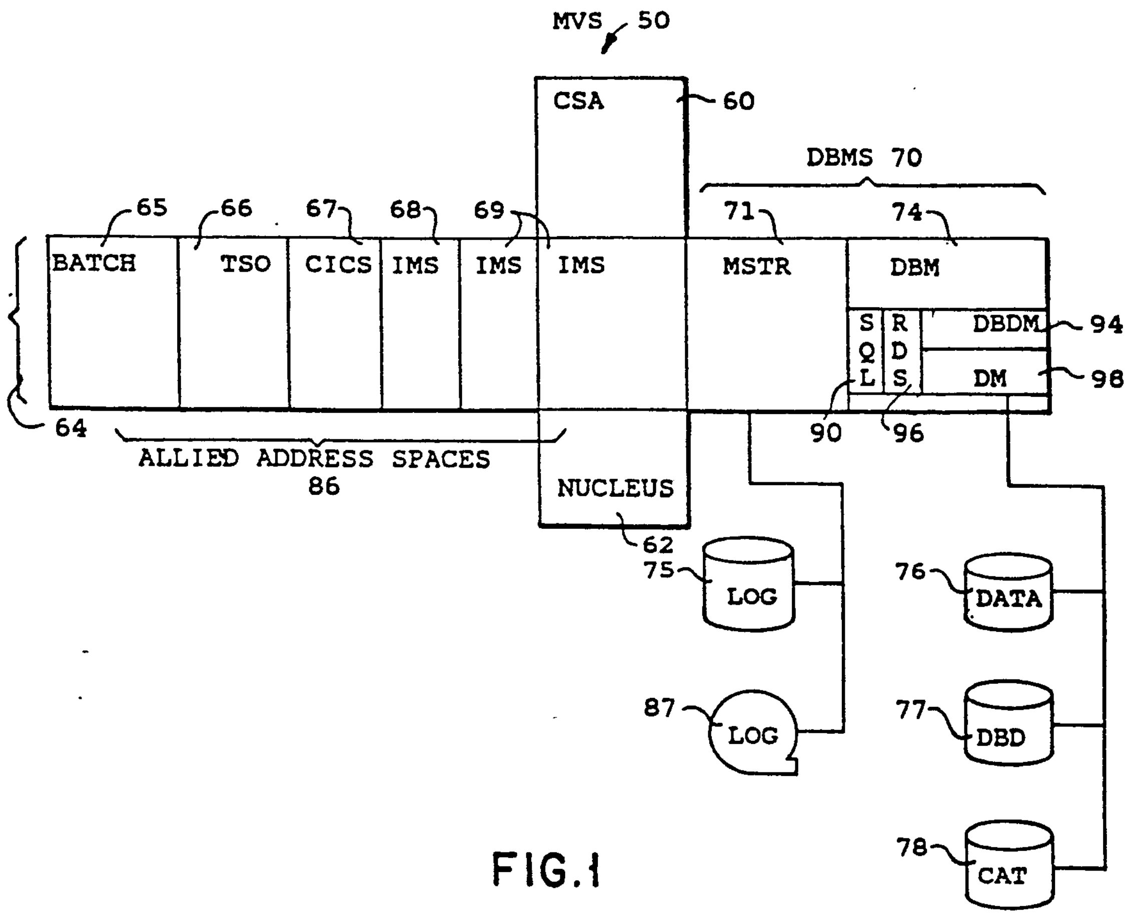
MVS 50
CSA
60
DBMS 70
65
66
67
68
69
71
74
BATCH
TSO
CICS
IMS
IMS
IMS
MSTR
DBM
SQL
RDS
DBDM
94
DM
98
64
90
96
ALLIED ADDRESS SPACES
86
NUCLEUS
62
75
LOG
76
DATA
87
LOG
77
DBD
78
CAT

FIG.1

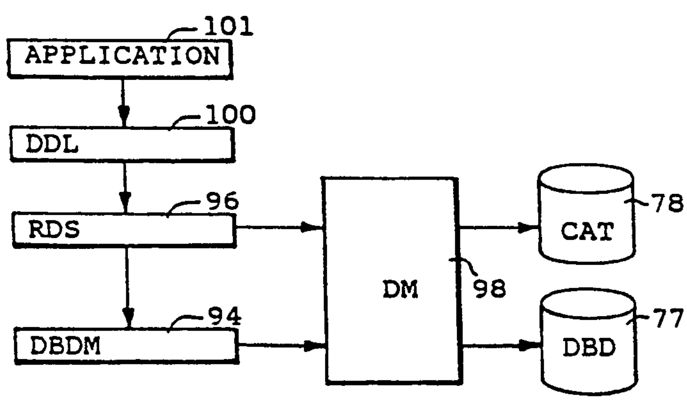
APPLICATION
101
DDL
100
RDS
96
DBDM
94
DM
98
CAT
78
DBD
77

FIG.2

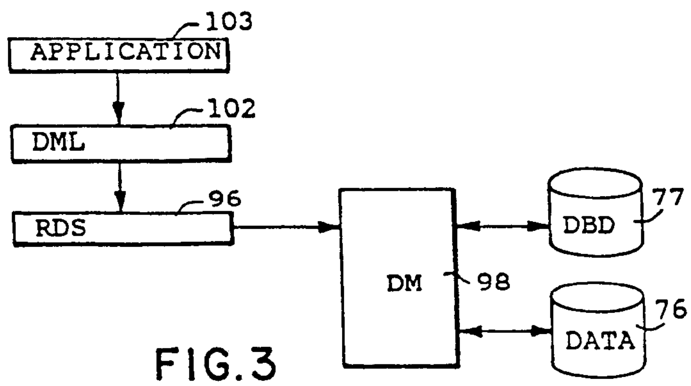


FIG.3

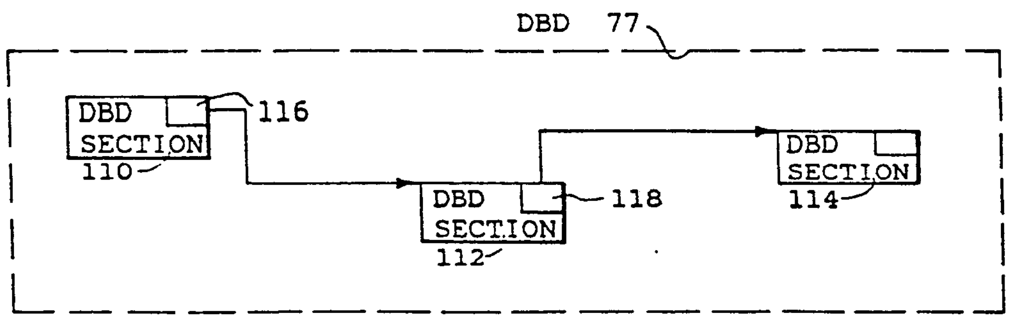


FIG.4

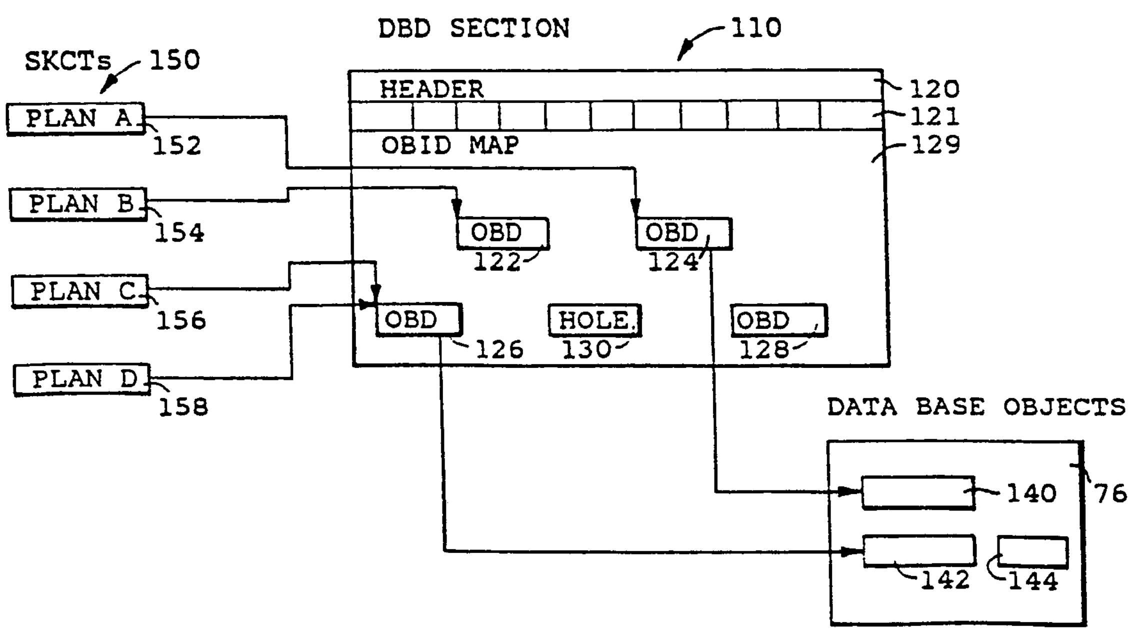


FIG.5

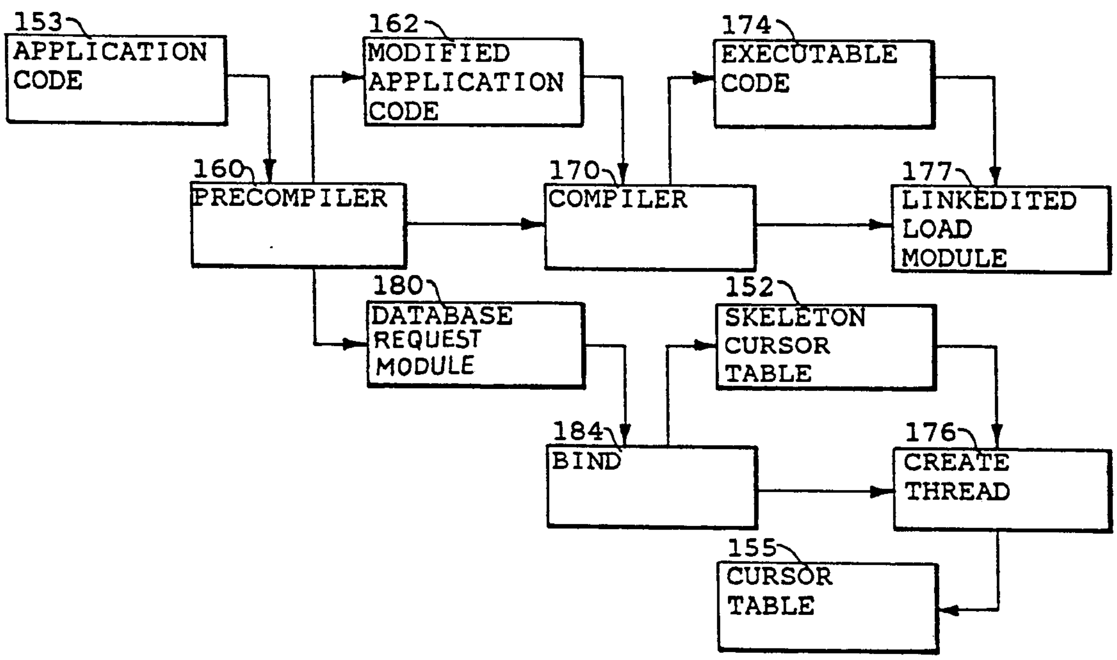
153
APPLICATION CODE
162
MODIFIED APPLICATION CODE
174
EXECUTABLE CODE
160
PRECOMPILER
170
COMPILER
177
LINKEDITED LOAD MODULE
180
DATABASE REQUEST MODULE
152
SKELETON CURSOR TABLE
184
BIND
176
CREATE THREAD
155
CURSOR TABLE

FIG.6

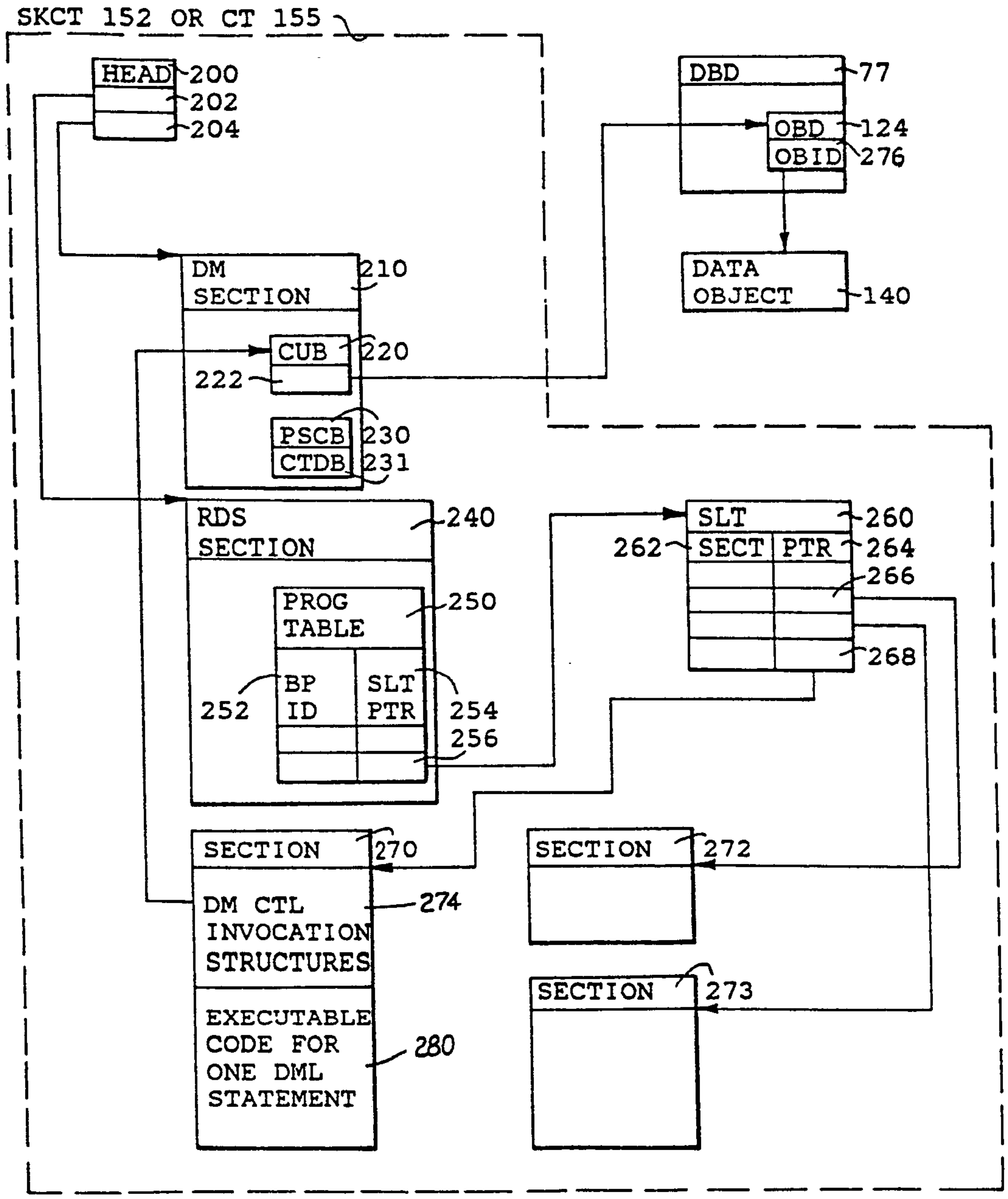
SKCT 152 OR CT 155
HEAD
200
202
204
DBD
77
OBD
124
OBID
276
DATA OBJECT
140
DM SECTION
210
CUB
220
222
PSCB
230
CTDB
231
RDS SECTION
240
PROG TABLE
250
BP ID
SLT PTR
252
254
256
SLT
260
262
SECT
PTR
264
266
268
SECTION
270
DM CTL INVOCATION STRUCTURES
274
EXECUTABLE CODE FOR ONE DML STATEMENT
280
SECTION
272
SECTION
273

FIG.7